Europäisches Patentamt

European Patent Office

Office européen des brevets

(11) Veröffentlichungsnummer: **0 157 104**
**A1**

## (12) EUROPÄISCHE PATENTANMELDUNG

(21) Anmeldenummer: **85101000.9**

(22) Anmeldetag: **31.01.85**

(51) Int. Cl.⁴: **H 05 B 7/08**

(30) Priorität: **24.02.84 DE 3406760**

(43) Veröffentlichungstag der Anmeldung: **09.10.85**
**Patentblatt 85/41**

(84) Benannte Vertragsstaaten: **AT BE CH DE FR GB IT LI LU NL SE**

(71) Anmelder: **C. CONRADTY NÜRNBERG GmbH & Co KG, Grünthal 1-6, D-8505 Röthenbach a.d. Pegnitz (DE)**

(72) Erfinder: **Wilhelmi, Herbert, Prof., Dr.-Ing., Richtericher-Strasse 36, D-5100 Aachen-Richterich (DE)**
Erfinder: **Kegel, Kurt, Prof., Dr.-Ing., Heliweg 18, D-4300 Essen 14 (DE)**
Erfinder: **Conradty, Claudio, Dipl.-Ing., Grünthal 7, D-8505 Röthebach (DE)**
Erfinder: **Zöllner, Dieter, Dr.rer.nat. Dipl.-Chem., Händelstrasse 19, D-8501 Schwaig/b. Nürnberg (DE)**
Erfinder: **Lauterbach-Dammler, Inge, Dr., Dipl.-Chem., Peter-Vischer-Strasse 15, D-8500 Nürnberg 1 (DE)**
Erfinder: **Rittmann, Friedrich, Am Buck 18, D-8501 Rückersdorf (DE)**

(74) Vertreter: **Füchsie, Klaus, Dipl.-Ing. et al, Hoffmann . Eitle & Partner Patentanwälte Arabeilastrasse 4, D-8000 München 81 (DE)**

(54) **Verfahren und Vorrichtung zum Schmelzen und Erhitzen von Werkstoffen.**

(57) Ein Gleichstrom-Lichtbogenofen weist mindestens eine in das Ofeninnere bewegbare Anode und mindestens eine ebenfalls von oben in das Ofeninnere bewegbare Kathode auf, zwischen der und dem Einsatzgut bzw. der Schmelze ein Lichtbogen steht. Die Anode (6) enthält im Inneren ein Kühlsystem mit einer Regelung (19, 15), welches zumindest den Eintauchbereich der Anode (6) auf eine Temperatur abkühlt, die geringer ist, als die Temperatur der Schmelze.

Diese Ofen-Vorrichtung und die Anode werden in Verfahren zum Schmelzen und Erhitzen von Werkstoffen mit Vorteil eingesetzt, wobei zumindest der Eintauchbereich der Anode auf einer Temperatur gehalten wird, die unter der Temperatur der Schmelze liegt.

Verfahren und Vorrichtung zum Schmelzen und Erhitzen
von Werkstoffen

Die Erfindung betrifft ein Verfahren sowie eine Vorrichtung zum Schmelzen von Werkstoffen, insbesondere zur Erzeugung von Metallen, Metallegierungen, z. B. Stahl, Metallverbindungen oder Glas usw. in einem Lichtbogenofen oder Ofen für die Sekundärmetallurgie, in deren Ofenraum mindestens eine mit dem positiven Pol einer Stromquelle verbundene, auf das Schmelzgut auffahrbare bzw. in die Schmelze einfahrbare Anode sowie mindestens eine mit dem negativen Pol der Stromquelle verbundene Kathode vorgesehen sind, wobei die Elektroden vornehmlich von oben eingeführt werden und die Kathode unter Bildung eines Lichtbogens zur Metallschmelze gehalten wird.

Aus Wilhelm Borchers: "Die elektrischen Öfen", Halle, Saale, 4. Auflage (1932), Seite 84, 85 ist ein Lichtbogenofen bekannt, der mit Gleichstrom betrieben wird. Bei diesem bekannten Gleichstrom-Lichtbogenofen handelt es sich um einen Versuchsofen, bei dem durch den Boden des Ofens eine Anode geführt ist, deren Spitze aus Platin oder anderem widerstandsfähigem, die Schmelze nicht verunreinigendem Material besteht. Das Innere des Ofens ist mit einer Graphitschicht versehen, um eine gute Stromverteilung zwischen den Metallausgangsstoffen bzw. zwischen der Metallschmelze und der Anode zu erzielen. Von oben ist als Gegenelektrode eine Kathode in den Bereich der Metallschmelze gebracht, zwischen der und der Metallschmelze sich der Lichtbogen bildet. Zur Verhinderung einer Aufzehrung der Kathode ist ihr Inneres gekühlt. Der bekannte Gleichstrom-Lichtbogenofen weist den Nachteil auf, daß die Bodenelektrode besonders hochwertig ausgebildet und eine gute Abdichtung erzielt werden muß. Anderenfalls besteht die Gefahr der Leck-Bildung.

Aus der DE-PS 24 40 674 ist es bekannt, bei einem Gleichstrom-Lichtbogenofen zur Herstellung von Stahl sowohl die Anode als auch die Kathode von oben in den Ofen einzuführen. Hierbei wird jedoch für die Einschmelzung der Eisenausgangsstoffe in der Einschmelzphase eine Schmelzanode verwendet, während in der anschließenden metallurgischen Bearbeitungsphase anstelle der Schmelzanode eine Verfahrensanode verwendet wird. Die Schmelzanode ist anders ausgebildet als die Verfahrensanode. Nachteilig ist jedoch, daß zwei Anodenarten vorgesehen sein müssen, was hinsichtlich Aufwand und Preis umständlich ist. Darüber hinaus ist es nachteilig, den Stromfluß zwischen den beiden Verfahrensphasen zu öffnen. Hierbei können Ein- und Ausschaltprobleme auftreten, insbesondere wegen der hohen Stromstärke.

Aus der GB-PS 118 357 ist ein elektrischer Lichtbogenofen bekannt, dessen Ofen aus einem Material gebildet ist, welches im kalten Zustand schlecht elektrisch leitfähig, im erhitzten Zustand jedoch relativ gut elektrisch leitfähig ist. Im Boden sind Kontakte eingearbeitet, die nicht durch den Boden in das Ofeninnere hineinragen. Der Ofen wird mit Wechselstrom betrieben. In der Anfahr- oder Einschmelzphase ist neben den Hauptelektrode eine Hilfselektrode von oben in die Eisenausgangsstoffe gebracht. Nach Bildung einer bestimmten Mindestschmelzmenge wird die Hilfselektrode mit den Eisenausgangsstoffen außer Kontakt gebracht oder ganz aus dem Ofen herausgezogen. In dieser zweiten Einschmelzphase übernehmen die im Boden eingearbeiteten Gegenkontakte ihre Funktion, wonach der Strom von der Schmelze über den mittlerweile elektrisch leitfähig gewordenen Bodenbereich in die Gegenelektroden fließt.

Der Erfindung liegt daher die Aufgabe zugrunde, ein Verfahren sowie eine Vorrichtung zum Schmelzen bzw. Erhitzen von Werkstoffen der eingangs genännten Art zu schaffen, bei dem unter Überwindung der vorbeschriebenen Nachteile in "ofenschonendem Betrieb" ein abbrandarmer bzw. abbrandfreier Stromübergang zwischen Anode und den Metallausgangsstoffen, insbesondere in der bestehenden Schmelzphase, bei energetisch günstiger Verfahrensführung erfolgt. Auf diese Weise soll einerseits eine langlebige Anode geschaffen werden, und andererseits eine Verunreinigung der Metallschmelze durch das Anodenmaterial bei der Metallherstellung vermieden werden.

Die Aufgabe wird erfindungsgemäß dadurch gelöst, daß zumindest die Anode durch ein geregeltes Kühlsystem derart gekühlt wird, daß ihre Außentemperatur zumindest im in die Metallschmelze eingetauchten Zustand in einem Bereich gehalten wird, der geringer ist als die Temperatur des geschmolzenen Metalls. Durch diese Verfahrensmaßnahme wird erreicht, daß sich um den eingetauchten Bereich der Anode eine dünne Schicht der Metallschmelze legt, die gegenüber der Schmelze im Umfeld eine geringere Temperatur aufweist und die bewirkt, daß ein Abbrand im eingetauchten Anodenbereich vermieden wird. Auf diese Weise wird die Lebensdauer der Anode beträchtlich erhöht und darüber hinaus der Vorteil erzielt, daß anodenbedingte Verunreinigungen weitgehend vermieden werden.

Gemäß einer weiteren Ausbildung wird der Tauchbereich der Anode auf einer Temperatur derart gehalten, daß sich um den Eintauchbereich eine anhaltende und erstarrte Schicht des Metalls ausbildet, die auch als "gefrorener" Metallmantel bezeichnet werden kann. Diese gleichsam kappenartig ausgebildete "gefrorene" Metallmantelschicht bietet der Anode in ihrem Eintauchbereich einen besonderen Schutz bei gut leitendem elektrischen Verhalten.

Um nun auch die Anode beim Anfahren und damit beim Einschmelzen der Metallausgangsstoffe vor unerwünschtem Abbrand zu schützen bzw. um zu verhindern, daß sich während der Einschmelzphase ein Lichtbogen zwischen der Anode und den Metallausgangsstoffen bildet, ist gemäß einer weiteren Ausbildung vorgesehen, die Anode bei eingeschalteter Stromquelle in der Einschmelzphase mit Hilfe eines geregelten Vorschub-Antriebes in ständiger Kontaktverbindung mit den Metallausgangsstoffen zu halten. Auf diese Weise wird gewährleistet, daß ein gut leitender elektrischer Übergang zwischen der Anode und den Metallausgangsstoffen besteht. Sowie der Kontaktdruck im Wege des Einschmelzvorganges durch das Nachrutschen der Metallausgangsstoffe nachläßt, erfolgt die geregelte Abwärtsbewegung der Anode zum Nachregeln des Kontaktdruckes. Auf diese Weise wird verhindert, daß ein Lichtbogen zwischen Anode und Metallausgangsstoffen entsteht, der sonst zu einer Beschädigung der Anode führen könnte. Somit wird darüber hinaus gewährleistet, daß der Lichtbogen nur zwischen den Metallausgangsstoffen und der Kathode in der Einschmelzphase und danach zwischen der Metallschmelze und der Kathode gezogen wird.

In vorteilhafter Weise wird mit Hilfe des geregelten Vorschub-Antriebes ein vorgegebener Kontaktdruck zwischen Anode und Metallausgangsstoffen aufrecht erhalten. Zur Feststellung bzw. Messung des Kontaktdruckes kann eine mechanische, eine elektrische oder thermoelektrische Meßvorrichtung verwendet werden. Bei Verwendung einer thermoelektrischen Meßvorrichtung wird in vorteilhafter Weise die Temperatur in der Anodenspitze gemessen. Aufgrund dieser Temperaturmessung kann insbesondere auch festgestellt werden, ob sich zwischen Anode und Metallausgangsstoffen ein Lichtbogen bildet, dessen Temperatur besonders hoch ist. Es ist aber auch denkbar, daß man eine mechanische und thermoelektrische Meßvorrichtung miteinander kombiniert.

Bei Verwendung einer rein elektrischen Meßvorrichtung wird in vorteilhafter Weise zur Regelung des Kontaktdruckes zwischen der Anode und dem Metallausgangsmaterial aus dem Anodenstrom ein elektrischer Strom oder eine Spannung abgeleitet, die als sogenannte Ist-Kenngröße für den elektrischen Widerstand zwischen Anode und Metallausgangsmaterial dient und die zur Regelung des Vorschub-Antriebes herangezogen wird. Bekanntlich wird bei abnehmendem Kontaktdruck bzw. bei Unterbrechung der Berührung zwischen Anode und Metallausgangsmaterial der elektrische Widerstand erhöht und damit der Strom verringert. Diese Widerstands- bzw. Stromänderung kann vor Entstehung eines Lichtbogens als Regelungskenngröße für das Nachschieben der Anode herangezogen werden.

Zur mechanischen Sicherung der Anode wird die von der Anode auf die Metallausgangsstoffe ausgeübte Kraft auf einen vorgegebenen oberen Wert begrenzt, wofür die mechanische Druckmeßvorrichtung verwendet wird. Um nun dem geregelten Vorschub-Antrieb zu signalisieren, daß die Anode in die Metallschmelze eingetaucht ist, ist eine Metallschmelz-Signalisiervorrichtung vorgesehen, die außerdem zur Regelung der gewünschten Eintauchhilfe der Anode in der Metallschmelze dienen kann.

In vorteilhafter Weise erfolgt die Kühlung der Anode bereits beim Einschalten des Stromkreises zum Schmelzen des Metalles. Hierdurch wird gewährleistet, daß der Abbrand der Anode bereits beim Anfahren bzw. Einschmelzen der Metallausgangsstoffe besonders gut verhindert wird. Auf diese Weise wird die Lebensdauer der Anode erhöht.

Die Kühlung kann mit Hilfe von Flüssigkeit oder Gas erfolgen. Auch ist es möglich, daß die Kühlung der Anodenspitze mit Hilfe von Wärmerohren (Heat-Pipes) erfolgt, wobei die durch die Wärmerohre aufgenommene Wärme vorzugsweise durch das geregelte Flüssigkeitskühlsystem abgeführt, wird.

Die Aufgabe wird außerdem durch den Gleichstrom-Lichtbogenofen zur Durchführung des Verfahrens gelöst, wobei ein geregeltes Kühlsystem in der Anode vorhanden ist, das die Kühlung zumindest des Eintauchbereiches der Anode unter die Temperatur der Metallschmelze gestattet. In vorteilhafter Weise wird die Temperatur des Eintauchbereiches der Anode so weit gegenüber der Schmelztemperatur der Metallschmelze abgesenkt, daß sich um den Eintauchbereich ein sogenannter gefrorener Mantel der Metallschmelze bildet.

Gemäß einer weiteren Ausbildung weist der Gleichstrom-Lichtbogenofen ein Kühlsystem auf, welches einen Kühlmediumgeber enthält, der hinsichtlich Temperatur des Kühlmediums und/oder Durchflußleistung durch eine Kühlmediumregelstufe geregelt wird, die eine erste Steuerverbindung mit mindestens einem thermoelektrischen Wandler in dem Eintauchbereich der Anode aufweist. Mit Hilfe solcher thermoelektrischer Wandler wird für die Ist-Werterkennung der Temperatur des Eintauchbereiches der Anode sichergestellt, daß diese Temperatur stets im Mittel auf dem gewünschten Wert gehalten wird. Bei eventueller ungewünschter Lichtbogenausbildung wird eine Temperaturerhöhung dem Regelsystem gemeldet, woraufhin neben dem bereits zuvor erwähnten Nachschieben der Anode eine Erhöhung der Kühlwirkung erfolgt.

In vorteilhafter Weise ist die Kühlmediumregelstufe mit einer Vergleichstemperaturstufe sowie wahlweise mit einer Schmelzpegelmeßstufe verbunden. Hieraus ergibt sich der Vorteil, daß die einzustellende Temperatur im Endbereich der Anode auf eine Vergleichstemperatur bezogen wird. Die Vergleichstemperatur kann z. B. während des Einschmelzvorganges der Metallausgangsstoffe eine andere sein als beim Eintauchen der Anode in die Metallschmelze.

Gemäß einer weiteren Ausbildung enthält der Gleichstrom-Lichtbogenofen eine Motorsteuerstufe für den Vorschub-Antrieb, wobei die Motorsteuerstufe sowohl durch die Schmelzpegelstufe als auch durch eine Temperaturdifferenzstufe gesteuert wird. Die Temperaturdifferenzstufe ermittelt die Differenz zwischen der Temperatur im Anodenendbereich und der Soll-Temperatur.

Gemäß einer anderen Ausgestaltung ist für die Erkennung des Strom- oder Spannungswertes des Stromkreises des Schmelzflußsystems eine Signalvergleichsschaltung vorgesehen, durch die die Motorsteuerstufe des Vorschub-Antriebsmotors angesteuert wird. In vorteilhafter Weise ist die Vergleichsstufe mit einer eine vorgegebene Zeitspanne wirksam werdende Signal-Integrationsstufe verbunden. Dieser ist eine Vergleichsstufe nachgeordnet, durch die beim Überschreiten des Vergleichssignalwertes durch die vom Elektrodenstrom abgeleiteten Signale eine Schaltstufe zur Unterbrechung des Elektrodenstromes geöffnet wird. Hieraus ergibt sich der Vorteil, daß dann, wenn alle Regelungsmaßnahmen ohne Erfolg bleiben, der Elektrodenstrom unterbrochen wird.

0157104

Zur Durchführung bzw. Ausübung des erfindungsgemäßen Verfahrens kann die Anode zumindest im Eintauchbereich aus hochschmelzendem Material ausgebildet werden, um Notlaufeigenschaften bei Ausfall des Kühlmittels zu gewährleisten. Des weiteren enthält die Anode Kühlmittel-Zuführkanäle sowie Kühlmittel-Abführkanäle. Im Inneren der Anode ist zumindest im Eintauchbereich mindestens ein thermoelektrischer Wandler angeordnet, dessen elektrische Verbindung gesichert und nach außen geführt ist.

In vorteilhafter Weise verlaufen die elektrischen Zuführungsleitungen für die thermoelektrischen Wandler, die vorzugsweise als Thermoelemente ausgebildet sind, in einem Rohr, welches vorzugsweise in der Mitte der Anode angeordnet ist und durch eine Kühlflüssigkeit gekühlt wird. In vorteilhafter Weise verläuft das Rohr für die elektrischen Zuführungsleitungen des thermoelektrischen Wandlers im Kühlmittel-Zuführkanal. Hieraus ergibt sich der Vorteil, daß die elektrischen Verbindungsleitungen besonders gut gekühlt sind.

Gemäß einer weiteren Ausgestaltung ist die Anode in einen oberen und unteren Bereich unterteilt, wobei der obere Bereich mit einer Schutzummantelung versehen ist.

Gemäß einer weiteren Ausgestaltung ist im Eintauchbereich der Anode ein erster Kühlabschnitt mit mindestens einem, vorzugsweise aber mehreren Wärmerohren vorgesehen, die mit einem darüber befindlichen zweiten Kühlabschnitt korrespondieren, welcher Flüssigkeitszuführungs- und Abführungskanäle aufweist.

Gemäß einer anderen besonders vorteilhaften Ausgestaltung ist die Anode in ihrem den Eintauchbereich bildenden Endbereich mit einer erneuerbaren Schutzkappe aus schmelzfähigem Material versehen. Gemäß einer weiteren Ausbildung ist die Schmelztemperatur der Schutzkappe geringer als die der Metallausgangsstoffe. Hieraus ergibt sich der Vorteil, daß insbesondere für den Anlaufvorgang bzw. den Einschmelzvorgang der Metallausgangsstoffe für die Anode eine zusätzliche Sicherheit geschaffen wird, um die schädliche Wirkung eventuell auftretender Lichtbögen an der Anode zu eliminieren und/oder um den Abbrand der Anode während des Einschmelzvorganges trotz Kühlung zusätzlich zu reduzieren. Diese Schutzkappe kann bei geeigneter Dimensionierung auch dazu herangezogen werden, um in der Anfahrphase eine ausreichende Schmelzmenge zu erzeugen.

Gemäß einer weiteren Ausbildung ist zwischen der Schutzummantelung des oberen Bereiches der Anode und ihrer Außenfläche ein Ringkanal für ein Gas gebildet. Als Gas kann z. B. ein reduzierendes oder inertes Gas verwendet werden. Dieses Gas kann auch als Trägergas für die Zufuhr von Zusatzmaterialien verwendet werden. Mit diesem Gas- bzw. Trägergasstrom soll das Schmelzgut behandelt werden.

In vorteilhafter Weise ist die Schutzummantelung im Eintauchbereich der Anode für die Gasströmung z. B. trompetenförmig ausgebildet. Hierdurch wird erreicht, daß um die Anode ein Gasstrom auftritt, der beim Verlassen der trompetenförmigen Öffnung radial nach außen umgelenkt wird, woraus sich der Vorteil ergibt, daß die Lichtbögen der benachbarten Kathoden keine bzw. nur eine geringe Hitzewirkung auf die Anode haben (Spreizung bzw. Verbreiterung der Lichtbogen-Fußpunkte von der Anode weg).

In vorteilhafter Weise sind im Bereich der Anodenspitzen Austrittsöffnungen für inertes bzw. reduzierendes bzw. leicht oxidierendes Gas vorgesehen, deren Zuführungskanäle gegenüber dem Kühlsystem abgedichtet im Inneren der Anode angeordnet sind. Die Austrittsöffnungen für das Gas sind vorzugsweise so im Bereich der Anodenspitze bzw. in ihrem Eintauchbereich verteilt, daß bei in die Metallschmelze eingetauchter Anodenspitze sich ein erster Teil der Öffnungen unterhalb des Schmelzpegels und ein zweiter Teil sich oberhalb dieses Pegels befindet. Die Beschickung oder Beaufschlagung der Metallschmelze mit Gas, sei es durch die Öffnungen oberhalb des Schmelzpegels oder sei es durch den Ringbereich der Ummantelung, hat die Aufgabe, nicht nur die seitlichen Lichtbögen zwischen der bzw. den Kathoden und der Schmelze zu beeinflussen, sondern auch um eine möglichst große und intensive Berührung des eingeführten Gases, insbesondere wenn dieses reduzierender Natur ist, mit der Schmelze herzustellen.

Gemäß einer weiteren Ausbildung ist zumindest der in die Metallschmelze eingetauchte Bereich der Anode aus hochtemperaturbeständigem und elektrisch gut leitendem Keramikmaterial, gegebenenfalls mit einer Dotierung oder aus hochtemperaturbeständigem elektrisch gut leitendem Metall bzw. Metallverbindungen gebildet.

Gemäß einer anderen Ausgestaltung ist der Außenbereich der Anodenspitze mit einer lösbaren Materialzusatzschicht versehen, die bei in die Metallschmelze eingetauchter Anode eine Legierungsverschiebung derart bewirkt, daß im unmittelbaren Bereich der Anodenspitze der Schmelzpunkt gegenüber der übrigen Metallschmelze erhöht ist.

Im folgenden wird die Erfindung anhand von in den Figuren dargestellten Ausführungsbeispiele beschrieben. Es zeigen:

Fig. 1    eine schematische Schnittdarstellung eines Gleichstrom-Lichtbogenofens vor dem Anfahren,

Fig. 2    eine schematische Draufsicht des Lichtbogenofens gemäß Fig. 1,

Fig. 3 und 4    die Einschmelzphase der Metallausgangsstoffe,

Fig. 5    eine schematische Lichtbogenofen-Teilansicht mit einer Anode, die eine Schutzummantelung aufweist,

Fig. 6    einen Lichtbogenofen mit einer Anode, die im Bereich ihrer Spitze mit einer Schutz-Schmelzkappe versehen ist,

Fig. 7    eine Lichtbogenofen-Teilansicht mit einer Anode, die eine Schutzummantelung aufweist mit trompetenförmiger Öffnung,

Fig. 8        den Teil einer Anode,

Fig. 9        eine Teilansicht einer anderen Anodenausbildung,

Fig. 10 und 11        Teilschnittansichten von Anodenspitzen mit Wärmerohren.

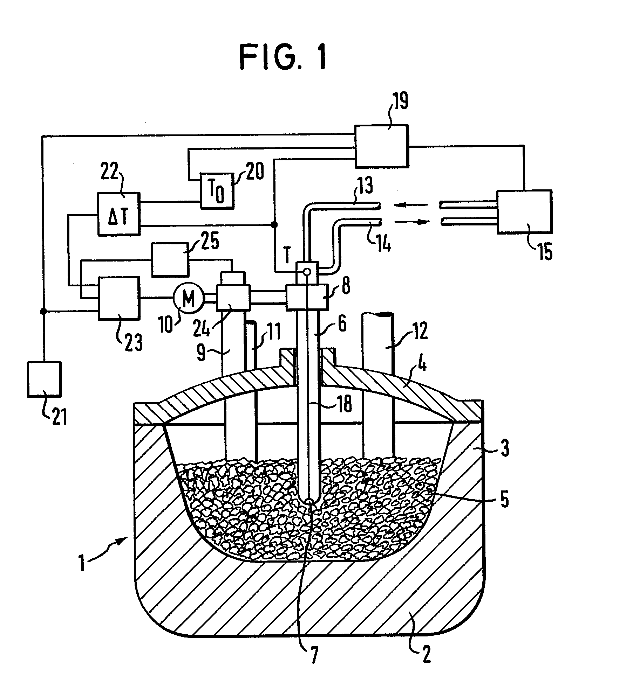

Gemäß Fig. 1 ist mit 1 ein Gleichstrom-Lichtbogenofen
bezeichnet, der ein aus einem Ofenboden und einer
Ofenwand 3 bestehendes Ofengefäß aufweist, auf dem
ein Deckel 4 vorgesehen ist. Mit 5 ist das Einsatzgut
bezeichnet, das in das Ofengefäß eingebracht wird.
Der Ofendeckel 4 weist eine zentrale Öffnung auf,
durch die eine Anode 6 in das Ofeninnere eingeführt
ist. Ein im Bereich der Anodenspitze vorgesehenes
thermoelektrisches Element ist mit 7 bezeichnet. Die
Anode 6 ist mit einer Haltevorrichtung 8 verbunden,
die an einem Führungsteil 9 mit Hilfe eines Elektromotors 10 auf- und abbewegbar ist.

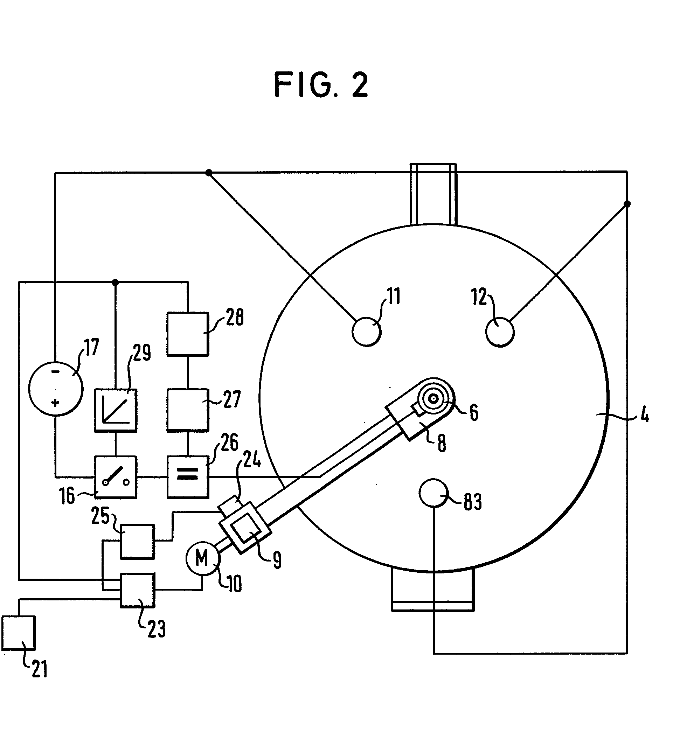

Ebenfalls von oben ragen drei um 120° versetzte Kathoden 11, 12 und 13 durch entsprechende Öffnungen im
Deckel 4 in das Innere des Gleichstrom-Lichtbogenofens, wie dies auch zusätzlich anhand der Fig. 2 ersichtlich ist.

Die Anode weist eine Zuführungsleitung 13 sowie eine
Abführungsleitung 14 für eine Kühlflüssigkeit auf.
Ein Kühlflüssigkeitsgeber ist mit 15 bezeichnet.

Die Anode 6 ist über einen Schalter 16 mit dem Pluspol einer Gleichstromquelle 17 verbunden. Die Kathoden 11, 12 und 13 sind mit dem Minuspol der Gleichstromquelle 17 verbunden.

Von dem Thermoelement 7 führt eine elektrische Verbindung 18 zu einer Kühlflüssigkeit-Regelstufe 19, die eine weitere Eingangssteuerverbindung mit einer Vergleichstemperaturstufe 20 sowie eine dritte Steuerverbindung mit einer Schmelzpegelmeßstufe 21 aufweist. Von der Vergleichstemperaturstufe 20 führt eine weitere Verbindung zu einer Temperaturdifferenzstufe 22, die über die Steuerverbindung 18 mit dem thermoelektrischen Wandler 7 verbunden ist.

Mit 23 ist eine Motorsteuerstufe bezeichnet, die einerseits mit der Temperaturdifferenzstufe 22 und andererseits mit der Schmelzpegelstufe 21 verbunden ist. Der Ausgang ist an den Motor 10 des Vorschub-Antriebes für die Anode angeschlossen. Mit 24 ist ein Druckmesser bezeichnet, der die Kraft der Anode auf die Metallausgangsstoffe mißt. Dieser Druckmesser 24 ist über einen druckelektrischen Wandler 25 mit der Motorsteuerstufe 23 verbunden.

Mit Hilfe der Kühlflüssigkeit-Regelstufe 19 wird in Abhängigkeit von der durch den thermoelektrischen Wandler 7 gemessenen Temperatur sowie in Abhängigkeit von der eingestellten Vergleichstemperatur in der Stufe 20 sowie in Abhängigkeit von dem Signal der Schmelzpegelmeßstufe 21 ein Ausgangssignal erzeugt, welches einerseits die Temperatur und andererseits die Durchflußmenge der Kühlflüssigkeit in der Vorrichtung 15 regelt. In der Temperaturdifferenzstufe 22 wird ein Steuersignal für die Motorsteuerschaltung 23 erzeugt, um bei eventuellen Temperaturerhöhungen in der Anodenspitze bzw. infolge Lichtbogenbildung

- 15 -

0157104

den Vorschub-Antrieb im Sinne einer Abwärtsbewegung der Anode zu steuern. Zusätzlich erfolgt eine Bewertung des Kontaktdruckes der Anode mit dem Metallausgangsmaterial in der Einschmelzphase dadurch, daß ein von der Druckmeßstufe 24 über die Wandlerstufe 25 erzeugtes elektrisches Signal mit auf die Motorsteuerstufe 23 einwirkt. Mit Hilfe der Schmelzpegelmeßstufe 21 wird der Motorsteuerschaltung 23 signalisiert, daß die Anode sich in der Schmelze befindet.

Gemäß Fig. 2 befindet sich im Stromkreis der Elektroden neben dem steuerbaren Schalter 16 eine Strom- oder Spannungswandlerstufe 26, der eine Impulswandlerstufe 27 und eine Signalvergleichsschaltung 28 nachgeordnet sind. Durch diese Signalvergleichsschaltung können z. B. auf elektrischem Wege mangelnde Kontaktberührungsverhältnisse zwischen der Anode und den Metallausgangsstoffen ausgewertet und für die Steuerung des Vorschub-Antriebes 10 herangezogen werden.

Mit 29 ist eine Integrationsstufe bezeichnet, die während einer vorgegebenen Zeitspanne eingeschaltet ist. Durch diese Integrationsstufe 29 wird ein Ausgangssignal zur Öffnung des Schalters 16 dann abgegeben, wenn nach Verstreichen der genannten Zeitspanne ein ausreichend hohes Steuersignal auftritt, welches anzeigt, daß trotz Einwirkung auf die Regelschleifen im Sinne der Kühlung der Anode als auch im Sinne der Erhöhung des Kontraktdruckes zwischen Anode und Metallausgangsmaterial kein Temperaturrückgang in der Anodenspitze erfolgt. Die in Fig. 2 dargestellte Möglichkeit der Einwirkung auf den Vorschub-Antrieb kann alternativ als auch ergänzend zur Steuerung gemäß Fig. 1 angesehen werden.

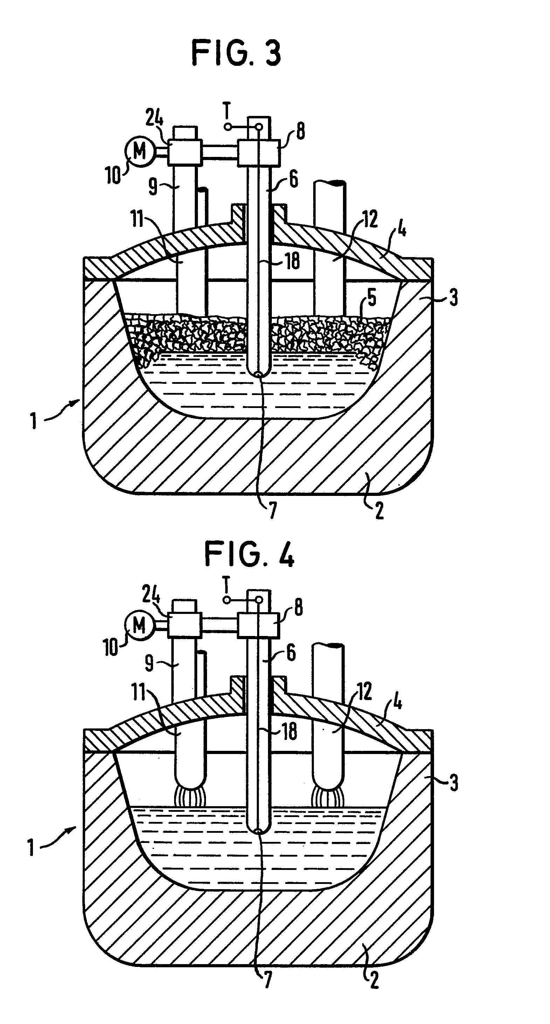

In den Fig. 3 und 4 sind die den Teilen gemäß Fig. 1 entsprechenden Teile mit gleichen Bezugszeichen versehen. In Fig. 3 ist bereits eine bestimmte Schmelzflüssigkeit vorhanden, während in Fig. 4 das Metallausgangsmaterial völlig eingeschmolzen ist.

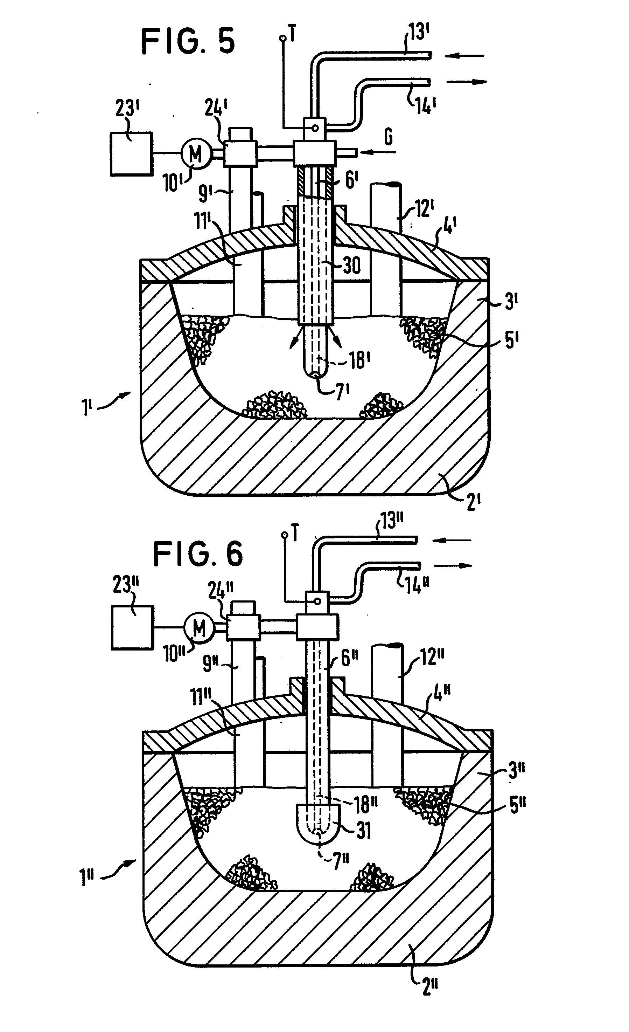

Bei der Ausführung gemäß Fig. 5 sind die den Teilen gemäß Fig. 1 entsprechenden Teile mit gleichen Bezugszeichen versehen. Zur Unterscheidung weisen sie jedoch Indizes auf. Im Unterschied zum Ausführungsbeispiel gemäß Fig. 1 ist die Anode mit einer Schutzummantelung 30 versehen. Diese Ummantelung 30 umgibt die Anode 6 in einem Bereich außerhalb ihres Eintauchbereiches. Zwischen Schutzummantelung und Außenwandung der Anode ist ein zylindrischer Ringkanal gebildet, durch den Gas G in Richtung auf die Anodenspitze geleitet wird.

Bei der Ausführungsform gemäß Fig. 6 ist bei sonst gleicher Ausbildung des Gleichstrom-Lichtbogenofens die Anode 6" mit einer Schutzkappe 31 versehen, die während des Einschmelzens des Metallausgangsmaterials 5" abschmilzt und in dieser Einschmelzphase einen zusätzlichen Schutz für die Anodenspitze bietet.

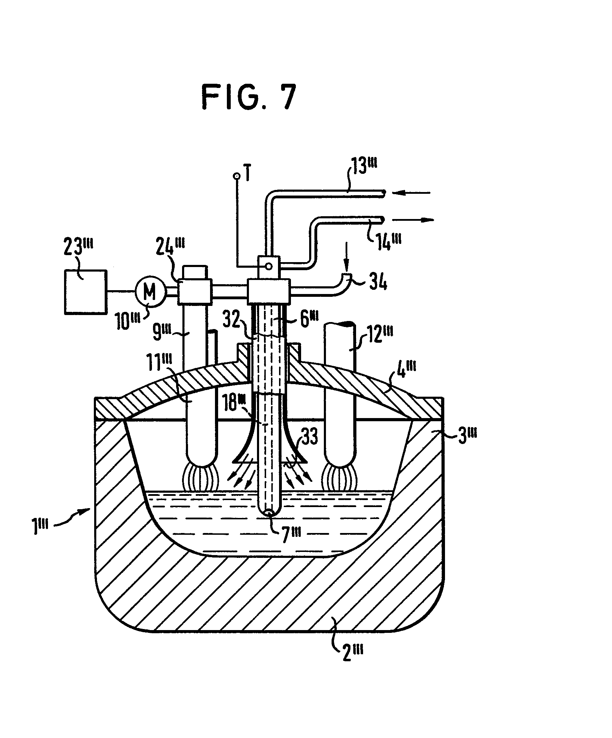

Bei der Ausführungsform gemäß Fig. 7 sind wie bei den vorhergehenden Figuren die den Teilen gemäß Fig. 1 entsprechenden Teile mit gleichen Bezugszeichen versehen. Zur Unterscheidung weisen sie jedoch Indizes auf. Im Unterschied zum Ausführungsbeispiel gemäß Fig. 5 ist eine Schutzummantelung 32 um die Anode 6"' vorgesehen, die auf der der Anodenspitze zugewandten Seite trompetenförmig ausgebildet ist. Diese Trompetenöffnung 33 ermöglicht den sogenannten Coanda-Effekt. Über eine Zuführungsleitung 34 außerhalb des Schmelzofens tritt Gas in den zylindrischen Kanal zwischen Schutzummantelung 32 und dem Außenmantel der Anode 6"' in das Ofeninnere. Aufgrund der trompetenförmigen Öffnung wird das nach unten strömende Gas seitlich abgelenkt und bildet um den freien Anodenbereich eine Art Gasströmungskegel, der einerseits dafür sorgt, daß die Lichtbogenhitze der Kathoden 11"', 12"' und 13"' so wenig als möglich auf die Anode zurückwirkt. Andererseits wird hierdurch eine großflächige Berührung des Gases mit der Schmelze hervorgerufen. Auch ist es bei erhöhter Strömungsgeschwindigkeit möglich, daß durch den Gasstrom der Lichtbogen zwischen Kathode und Schmelze nach außen verschoben wird.

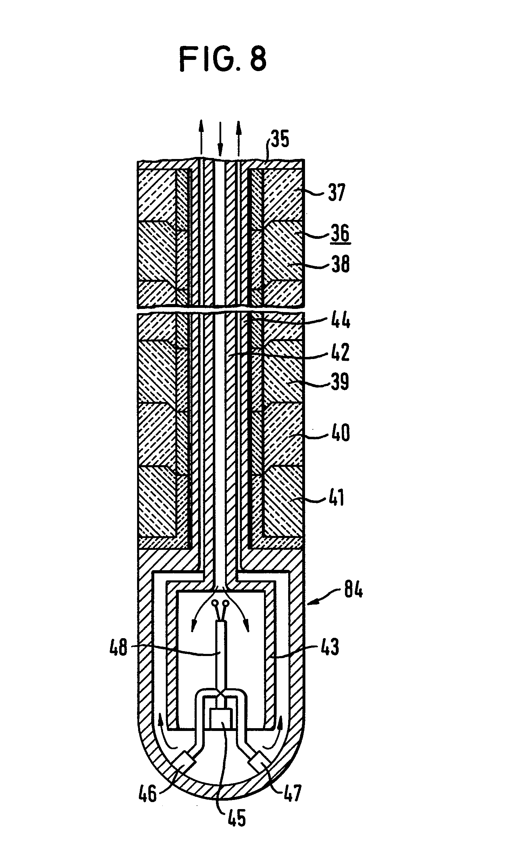

Bei der Anode gemäß Fig. 8 ist ein nach außen frei zugänglicher Eintauchbereich 34 sowie ein darüber befindlicher Bereich 35 vorgesehen, der von einer Schutzummantelung 36 umgeben ist, die aus Segmenten 37, 38, 39, 40 und 41 besteht. Mit 42 ist ein Kühlflüssigkeits-Zuleitungsrohr bezeichnet, welches im Anodenspitzenbereich eine Aufweitung 43 aufweist. Mit 44 ist ein das Flüssigkeits-Zuleitungsrohr umgebendes größeres Rohr bezeichnet. Der zylindrische Zwischenraum zwischen Innen- und Außenrohr dient als Kühlflüssigkeits-Rückführungskanal. Innen- und Außenrohr bestehen aus elektrisch leitfähigem hochschmelzenden Metall. Mit 45, 46 und 47 sind Thermoelemente bezeichnet, die über Zuleitungsrohre 48 miteinander verbunden sind, in denen die elektrischen Anschlußleitungen gut isoliert nach außen verlaufen.

Das Zuleitungsrohr 48 ist in Fig. 8 der Übersichtlichkeit wegen nach oben unterbrochen.

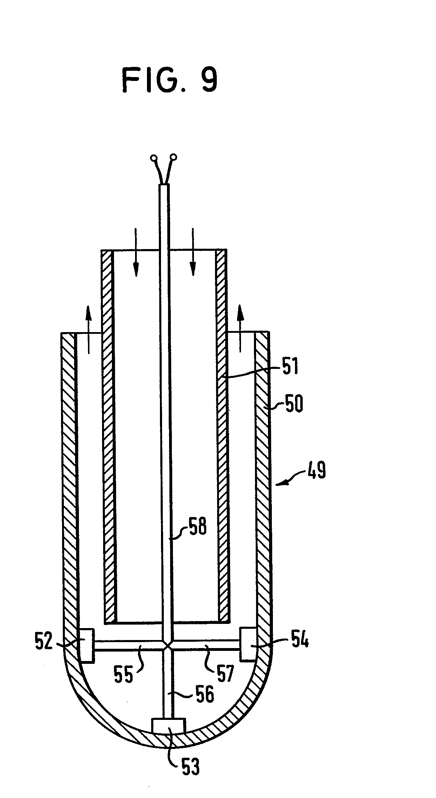

Fig. 9 zeigt eine andere Ausführungsform einer Anode
49, die aus einem äußeren geschlossenen elektrisch
leitfähigen Rohr 50 und aus einem Innenrohr 51 besteht. Das Innenrohr dient als Kühlflüssigkeitszuleitung, während der Zwischenraum zwischen Außen- und
Innenrohr als Kühlflüssigkeit-Rückführkanal dient.
Mit 52, 53 und 54 sind Thermoelemente bezeichnet, die
über Rohre 55, 56 und 57 miteinander verbunden sind
die in ein gemeinsames Rohr 58 münden. In diesen Rohren sind die elektrischen Anschlußdrähte für die
Thermoelemente angeordnet.

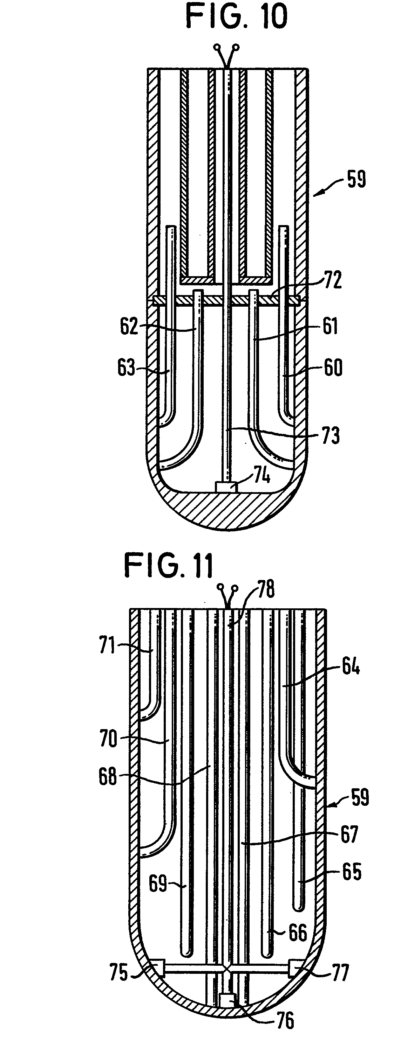

Bei den Ausführungsformen gemäß den Fig. 10 und 11
sind im Eintauchbereich einer Anode 59 Wärmerohre 60,
61, 62, 63 (Fig. 10) bzw. 64, 65, 66, 67, 68, 69, 70
und 71 (Fig. 11) vorgesehen. Die Wärmerohre bilden
ein erstes Kühlsystem, welches durch eine Trennwand
72 in Fig. 10 von einem Flüssigkeitskühlsystem abgetrennt sind. Die Wärmeübergabe erfolgt über die in
das zweite Kühlsystem ragenden Bereiche der Wärmerohre. In Fig. 10 ist mit 73 ein Zuleitungsrohr für die
elektrischen Anschlüsse eines Thermoelementes 74 bezeichnet, welches sich auf der Innenseite der Anodenspitze befindet.

In Fig. 11 sind Thermoelemente 75, 76 und 77 im Anodenspitzenbereich angeordnet und mit einem Zuleitungsrohr 78 für die elektrischen Anschlußverbindungen verbunden.

Durch das erfindungsgemäße Verfahren und die Vorrichtung werden eine Reihe von Vorteilen erzielt. Diese bestehen u. a. in einem energetisch günstigen, sicheren Schmelzbetrieb, in dem insbesondere der sonst übliche Einsatz der Gegenelektroden durch den Ofenboden bzw. dessen Verwendung als Gegenelektrode unterbleiben kann. Außerdem ist es nicht notwendig, für den Einschmelzvorgang und den nachfolgenden Schmelzbetrieb verschiedenartige Elektrodentypen einzusetzen (z. B. gesonderte Schmelzelektrode und Verfahrenselektrode), wenngleich nicht bei allen Ausführungsformen des erfindungsgemäßen Verfahrens zwingend in allen Phasen die gleiche Anoden- oder Kathodenkonstruktion eingesetzt werden muß.

0157104

Patentansprüche

1. Verfahren zum Schmelzen von Werkstoffen, insbesondere zur Erzeugung von Metallen, Metallegierungen, wie z. B. Stahl, Glas, hochlegierten Stählen oder Metallverbindungen, in einem Gleichstrom-Lichtbogenofen und/oder in Öfen für Sekundärmetallurgie, wie Pfannenöfen, in deren Ofenraum mindestens eine mit dem positiven Pol einer Stromquelle verbundene, auf das Schmelzgut auffahrbare bzw. in die Schmelze einfahrbare Anode sowie eine mit dem negativen Pol der Stromquelle verbundene Kathode vorgesehen sind, wobei die Elektroden vorzugsweise von oben eingeführt werden und die Kathode unter Bildung eines Lichtbogens zur Schmelze gehalten wird, dadurch g e k e n n - z e i c h n e t , daß mindestens die Anode durch ein geregeltes Kühlsystem derart gekühlt wird, daß ihre Außentemperatur zumindest im in die Schmelze eingetauchten Zustand in einem Temperaturbereich gehalten wird, der geringer ist als die Temperatur des geschmolzenen Werkstoffs, und zwar derart, daß sich um den Eintauchbereich der Anode eine anhaftende Erstarrungsschicht aus dem Material der Schmelze anlegt ("gefrorener" Metallmantel).

2. Verfahren nach Anspruch 1, dadurch g e - k e n n z e i c h n e t , daß die Anode bei eingeschalteter Stromquelle in der Einschmelzphase mit Hilfe eines geregelten Vorschub-Antriebes in ständiger Kontaktverbindung mit den Metallausgangsstoffen gehalten wird.

3. Verfahren nach einem der Ansprüche 1 oder 2, dadurch g e k e n n z e i c h n e t , daß mittels des geregelten Vorschub-Antriebes ein vorgegebener Kontaktdruck zwischen Anode und Metallausgangsstoffen aufrecht erhalten wird.

4. Verfahren nach einem der vorhergehenden Ansprüche, dadurch g e k e n n z e i c h n e t , daß für die Regelung des Kontaktdruckes zwischen Anode und Metallausgangsmaterial entweder eine mechanische Druckmeßvorrichtung oder eine Meßvorrichtung zur Erfassung der Temperatur in der Anodenspitze verwendet wird.

5. Verfahren nach einem der Ansprüche 1 bis 3, dadurch g e k e n n z e i c h n e t , daß zur Regelung des Kontaktdruckes zwischen Anode und Metallausgangsmaterial aus dem Anodenstrom ein elektrischer Strom oder eine Spannung abgeleitet wird, die als Ist-Kenngröße für den elektrischen Widerstand zwischen Anode und Metallausgangsmaterial dient und die zur Regelung des Vorschub-Antriebes herangezogen wird.

6. Verfahren nach einem der vorhergehenden Ansprüche, dadurch g e k e n n z e i c h n e t , daß insbesondere über die mechanische Druckmeßvorrichtung die maximal von der Anode auf die Metallausgangsstoffe ausgeübte Kraft auf einen vorgegebenen oberen Wert begrenzt wird.

7. Verfahren nach einem der vorhergehenden Ansprüche, dadurch g e k e n n z e i c h n e t , daß das

Eintauchen der Anode in die Metallschmelze dem geregelten Vorschub-Antrieb durch eine Metallschmelz-Signalisiervorrichtung gemeldet wird und damit eine vorgegebene Eintauchhilfe nicht überschritten wird.

8. Verfahren nach einem der vorhergehenden Ansprüche, dadurch gekennzeichnet, daß die Kühlung der Anode bereits beim Einschalten des Stromkreises zum Schmelzen des Metalles erfolgt.

9. Verfahren nach Anspruch 8, dadurch gekennzeichnet, daß die Kühlung mit Hilfe von Flüssigkeit oder Gas erfolgt.

10. Verfahren nach einem oder mehreren der vorhergehenden Ansprüche, dadurch gekennzeichnet, daß die Kühlung der Gesamtelektrode oder Teilen davon mit Hilfe von Wärmerohren (Heat-Pipes) erfolgt und daß die durch die Wärmerohre aufgenommene Wärme durch das geregelte Flüssigkeits- bzw. Heat-Pipe-Kühlsystem abgeführt wird.

11. Elektrischer Lichtbogenofen oder Öfen für die Sekundärmetallurgie zur Durchführung des Verfahrens nach einem der Ansprüche 1 bis 10 mit mindestens einer vorzugsweise von oben in das Ofeninnere bewegbaren Anode und mit mindestens einer zur Bildung eines Lichtbogens oberhalb der Werkstoff-Schmelze befindlichen Kathode, dadurch gekennzeichnet, daß zumindest in der Anode ein geregeltes Kühlsystem vorhanden ist, das die Kühlung zumindest des Eintauchbereiches der Anode unter die Temperatur der Werkstoff-Schmelze gestattet.

0157104

12. Gleichstrom-Lichtbogenofen nach Anspruch 11, dadurch g e k e n n z e i c h n e t , daß die Anode mit einem geregelten Vorschub-Antrieb verbunden ist, der an eine Kontaktdruck-Meßstufe zur Erfassung des Kontaktdruckes zwischen Anode und den Metallausgangsstoffen angeschlossen ist bzw. daß der Kontaktdruck aus der elektrischen Stromreaktion des Vorschubantriebes abgeleitet wird.

13. Gleichstrom-Lichtbogenofen nach Anspruch 12, dadurch g e k e n n z e i c h n e t , daß die Kontaktdruck-Meßstufe den Kontaktdruck mechanisch, elektrisch oder thermisch erfaßt.

14. Gleichstrom-Lichtbogenofen nach einem der Ansprüche 11 bis 13, dadurch g e k e n n z e i c h n e t , daß das Kühlsystem einen Kühlmediumgeber aufweist, der hinsichtlich Temperatur des Kühlmediums und/oder Durchflußleistung durch eine Kühlmediumregelstufe geregelt ist, die eine erste Steuerverbindung mit mindestens einem thermoelektrischen Wandler in dem Eintauchbereich der Anode aufweist.

15. Gleichstrom-Lichtbogenofen nach Anspruch 14, dadurch g e k e n n z e i c h n e t , daß die Kühlmedium-Regelstufe eine weitere Steuerverbindung mit einer Vergleichstemperaturstufe sowie wahlweise eine dritte Steuerverbindung mit einer Schmelzpegelmeßstufe aufweist.

16. Gleichstrom-Lichtbogenofen nach einem der Ansprüche 11 bis 15, dadurch g e k e n n z e i c h n e t , daß der Vorschub-Antrieb einen Antriebsmotor aufweist, der durch eine Motorsteuerstufe beeinflußbar ist, die sowohl durch die Schmelzpegelstufe als
auch durch eine Temperaturdifferenzstufe gesteuert
wird.

17. Gleichstrom-Lichtbogenofen nach Anspruch 16,
dadurch g e k e n n z e i c h n e t , daß die Temperaturdifferenzstufe eine erste Steuerverbindung zum
thermoelektrischen Wandler des Eintauchbereichs der
Anoden als auch eine zweite Steuerverbindung mit
einer Sollwerttemperaturstufe hat.

18. Gleichstrom-Lichtbogenofen nach Anspruch 17,
dadurch g e k e n n z e i c h n e t , daß die Soll-
Werttemperaturstufe auf einen der Temperatur der Metallschmelze entsprechenden Wert eingestellt ist.

19. Gleichstrom-Lichtbogenofen nach einem der Ansprüche 11 bis 18, dadurch g e k e n n z e i c h -
n e t , daß vom Stromkreis der Schmelzflußanalyse
ein Strom- oder Spannungswert abgezweigt wird, der
einer Impulswandlerstufe zugeführt wird, durch die
eine Signalvergleichsschaltung beeinflußt wird, durch
welche die Motorsteuerstufe des Vorschub-Antriebsmotors angesteuert wird.

20. Gleichstrom-Lichtbogenofen nach Anspruch 19,
dadurch g e k e n n z e i c h n e t , daß die Vergleichsstufe mit einer eine vorgegebene Zeitspanne
wirksamen Signal-Integrationsstufe verbunden ist, der
eine Vergleichsstufe nachgeordnet ist, durch die beim
Überschreiten eines Vergleichssignalwertes ein Signal
erzeugt wird, das eine Schaltstufe zur Unterbrechung
des Elektrodenstromes öffnet.

21. Anode nach einem der vorhergehenden Ansprüche, dadurch g e k e n n z e i c h n e t , daß sie zumindest im Eintauchbereich aus hoch schmelzendem Material besteht, das Kühlmittel-Zuführkanäle sowie Kühlmittel-Abführkanäle aufweist.

22. Anode nach Anspruch 21, dadurch g e k e n n - z e i c h n e t , daß im Inneren der Anode zumindest im Eintauchbereich mindestens ein thermoelektrischer Wandler vorgesehen ist, dessen elektrische Verbindung gesichert nach außen geführt ist.

23. Anode nach Anspruch 22, dadurch g e k e n n - z e i c h n e t , daß die elektrischen Zuführungsleitungen für die thermoelektrischen Wandler, vorzugsweise Thermoelemente, in einem Rohr verlaufen, welches vorzugsweise in der Mitte der Anode angeordnet ist und durch eine Kühlflüssigkeit gekühlt wird.

24. Anode nach Anspruch 23, dadurch g e k e n n - z e i c h n e t , daß das Rohr für die elektrischen Zuführungsleitungen im Kühlzuführkanal angeordnet ist.

25. Anode nach einem der Ansprüche 21 bis 24, dadurch g e k e n n z e i c h n e t , daß sie in einen oberen und unteren Bereich unterteilt ist, wobei der obere Bereich mit einer Schutzummantelung versehen ist.

26. Anode nach einem der Ansprüche 21 bis 25, dadurch g e k e n n z e i c h n e t , daß im Eintauchbereich der Anode ein erster Kühlabschnitt mit mindestens einem Wärmerohr vorgesehen ist, das bzw.

die mit einem darüber befindlichen zweiten Kühlabschnitt korrespondieren, welcher Flüssigkeits-Zuführungs- und -Abführungskanäle aufweist.

27. Anode nach einem der Ansprüche 21 bis 26, dadurch g e k e n n z e i c h n e t , daß die Anode in ihrem den Eintauchbereich bildenden Endbereich mit einer Schutzkappe aus schmelzfähigem Material versehen ist.

28. Anode nach Anspruch 27, dadurch g e k e n n - z e i c h n e t , daß die Schmelztemperatur der Schutzkappe geringer ist als die der Metallausgangsstoffe.

29. Anode nach Anspruch 25, dadurch g e k e n n - z e i c h n e t , daß zwischen der Schutzummantelung des oberen Bereiches der Anode und ihrer Außenfläche ein Ringkanal für ein Gas gebildet ist.

30. Anode nach Anspruch 25 oder 29, dadurch g e - k e n n z e i c h n e t , daß die Anode zwei Gasführungen aufweist, nämlich eine erste innere konzentrische Gasführung für ein Reduktionsgas sowie eine zweite äußere konzentrische Gasführung zwischen der Schutzummantelung und der Anode für ein weiteres Gas, und daß die Schutzummantelung zur Anodenspitze hin derart ausgebildet ist, daß der äußere Gasstrom zu einer Verbreiterung des Abstandes zwischen der Anode und den Fußpunkten der Lichtbögen führt.

31. Anode nach Anspruch 30, dadurch g e k e n n - z e i c h n e t , daß die Schutzummantelung im Eintauchbereich der Anode zur Bildung der Verbreiterungswirkung für die Gasströmung zylinderrohrförmig, vorzugsweise im Endbereich trompetenförmig, ausgebildet ist.

32. Anode nach einem der Ansprüche 21 bis 31, dadurch g e k e n n z e i c h n e t , daß im Bereich der Anodenspitze bzw. im Mantelbereich Austrittsöffnungen für inertes bzw. reduzierendes bzw. leicht oxidierendes Gas vorgesehen sind, deren Zuführungskanäle gegenüber dem Kühlsystem abgedichtet im Inneren der Anode angeordnet sind.

33. Anode nach Anspruch 32, dadurch g e k e n n - z e i c h n e t , daß die Austrittsöffnungen für das Gas so im Bereich der Anodenspitze verteilt sind, daß bei in die Metallschmelze eingetauchter Anodenspitze sich ein erster Teil unterhalb des Schmelzpegels und ein zweiter Teil sich oberhalb des Pegels befindet.

34. Anode nach einem der Ansprüche 21 bis 33, dadurch g e k e n n z e i c h n e t , daß zumindest der in die Metallschmelze eingetauchte Bereich der Anodenspitze aus hochtemperaturbeständigem und elektrisch gut leitendem Keramikmaterial, ggf. mit einer Dotierung oder aus hochtemperaturbeständigem, gut elektrisch leitfähigem Metall bzw. Metallverbindung gebildet ist.

0157104

35. Anode nach einem der vorhergehenden Ansprüche, dadurch g e k e n n z e i c h n e t , daß der Außenbereich der Anodenspitze mit einer lösbaren Materialzusatzschicht versehen ist, die bei in die Metallschmelze eingetauchter Anode eine Legierungsverschiebung derart bewirkt, daß im unmittelbaren Bereich der Anodenspitze der Schmelzpunkt gegenüber der übrigen Metallschmelze erhöht ist.

36. Anode nach einem der vorhergehenden Ansprüche 1 bis 34, dadurch g e k e n n z e i c h n e t , daß zusammen mit dem durch die innere Zuführung zugeführten Trägergas schwer schmelzbares Material in Form von kleinen Partikeln in die Metallschmelze übertragen wird, wodurch um die Anodenspitze ein Schutzbereich, insbesondere ein Bereich gefrorener Schmelze, gebildet wird.

# FIG. 1

# FIG. 2

## FIG. 3

## FIG. 4

FIG. 5

FIG. 6

0157104

## FIG. 7

## FIG. 8

# FIG. 9

## FIG. 10

## FIG. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 232 551 (ISO METALURKOMPLEKT) <br> * Titel; Seite 3, Zeilen 1-9; Seite 5, Zeilen 28-33; Seite 6; Seite 7, Zeilen 17-31; Seite 8, Zeilen 1-11,23-31; Seite 9, Zeilen 1-11; Figuren 1,2 * <br><br> --- | 1,11 | H 05 B 7/08 |
| Y | CH-A- 245 530 (MASCHINENFABRIK OERLIKON) <br> * Seite 1, Zeilen 18-27,32-48; Seite 2, Zeilen 1-60; Figuren 1-7 * | 1,11 | |
| Y | <br><br> * Seite 1, Zeilen 18-27,32-48; Seite 2, Zeilen 1-60; Figuren 1-7 * <br><br> --- | 8-10, 21,30-34 | |
| A | DE-A-2 121 119 (LEYBOLD-HERAEUS GmbH) <br><br> * Seite 2, Zeilen 5-10; Seite 4, Zeilen 30-32; Seite 5, Zeilen 1-13,27-30; Seiten 6,7,8; Figur 1 * <br><br> --- -/- | 2-7,12 ,13,16 ,19 | RECHERCHIERTE SACHGEBIETE (Int. Cl.4) <br><br> H 05 B 7/00 <br> C 21 C 5/00 <br> F 27 B 3/00 |

Der vorliegende Recherchenbericht wurde für alle Patentansprüche erstellt.

| Recherchenort <br> DEN HAAG | Abschlußdatum der Recherche <br> 22-05-1985 | Prüfer <br> PIERRON P.A. |
|---|---|---|

Europäisches
Patentamt

**EUROPÄISCHER RECHERCHENBERICHT**

0157104
Nummer der Anmeldung

EP 85 10 1000

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 402 993 (IRSID)<br><br>* Seite 1, Zeilen 1-11; Seite 2, Zeilen 4-13,25-34; Seite 3, Zeilen 4-9; Seite 4, Zeilen 1-31; Seite 5, Zeilen 29-40; Seite 6; Figuren 1,2 * | 2,3,4,<br>6,12,<br>13,16 | |
| | --- | | |
| A | DE-A-3 231 740 (C. CONRADY NURNBERG)<br>* Titel; Seite 6, Zeilen 16-29; Seite 8, Zeilen 1-9; Seite 9, Zeilen 5-18,29-33; Seite 10; Seite 11, Zeilen 1-3; Figur 1 * | 10,21-<br>28 | |
| | --- | | |
| A | EP-A-0 109 356 (ARC TECHNOLOGIES SYSTEMS)<br><br>* Seite 2, Zeilen 3-5; Seite 4, Zeilen 13-22; Seite 10, Zeilen 6-14; Seite 12, Zeilen 15-32; Seite 13, Zeilen 29-35; Figuren 1,3 * | 9,10,<br>21,25,<br>26,34,<br>35 | RECHERCHIERTE<br>SACHGEBIETE (Int. Cl.4) |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 22-05-1985 | PIERRON P.A. |